# FASCICULE DE BREVET EUROPEEN

(11) **EP 3 847 341 B1**
(45) Date de publication et mention de la délivrance du brevet: **27.09.2023**
(21) Numéro de dépôt: 19779060.3
(22) Date de dépôt: 28.08.2019
(51) Int. Cl.: F01D 11/12, F02C 7/045, F04D 29/32, F04D 29/52, F04D 29/66

(54) **CARTER DE SOUFFLANTE POUR UNE TURBOMACHINE D'AÉRONEF INTÉGRANT DIRECTEMENT DES PORTIONS ABRADABLES ET AYANT DES PROPRIÉTÉS ACOUSTIQUES**
FANGEHÄUSE FÜR EINE FLUGZEUGTURBOMASCHINE MIT DIREKT INTEGRIERTEN ANSTREIFTEILEN UND MIT AKUSTISCHEN EIGENSCHAFTEN
FAN CASING FOR AN AIRCRAFT TURBOMACHINE DIRECTLY INCORPORATING ABRADABLE PORTIONS AND HAVING ACOUSTIC PROPERTIES

(30) Priorité: 04.09.2018 FR 1857910
(43) Date de publication de la demande: 14.07.2021
(73) Titulaire: SAFRAN AIRCRAFT ENGINES, 75015 Paris (FR)
(72) Inventeur: ROGNIN, Florent, Louis, André, 77550 Moissy-Cramayel (FR); BOUROLLEAU, Clément, 77550 Moissy-Cramayel (FR); DOMINGUES, Serge, 77550 Moissy-Cramayel (FR); FIORE, Vincent, Pascal, 77550 MOISSY-CRAMAYEL (FR); SIRAJ, Anwer, 77550 MOISSY-CRAMAYEL (FR)
(74) Mandataire: Gevers & Orès
(86) Numéro de dépôt international: PCT/FR2019/051988
(87) Numéro de publication internationale: WO 2020/049243

(56) Documents cités:
- EP-A1- 1 918 200
- FR-A1- 2 975 735
- FR-A1- 3 048 024
- FR-A1- 3 059 044

## Description

### DOMAINE TECHNIQUE

La présente invention concerne un carter de soufflante d'une turbomachine d'aéronef. L'invention concerne également une turbomachine d'aéronef, telle qu'un turboréacteur, comportant un tel carter. L'invention concerne également un procédé de fabrication d'un tel carter.

### ETAT DE LA TECHNIQUE

L'état de la technique comporte notamment les demandes de brevet FR-A1-2 975 735, FR-A1-3 048 024, FR-A1-3 059 044 et EP-A1-1 918 200.

Une turbomachine d'aéronef, telle qu'un turboréacteur, comprend généralement une soufflante entourée d'un carter de soufflante. Ce carter définit notamment une veine d'entrée d'air dans la turbomachine, et a pour fonction principale de garantir la rétention en cas d'ingestion de débris ou de perte d'une aube de la soufflante.

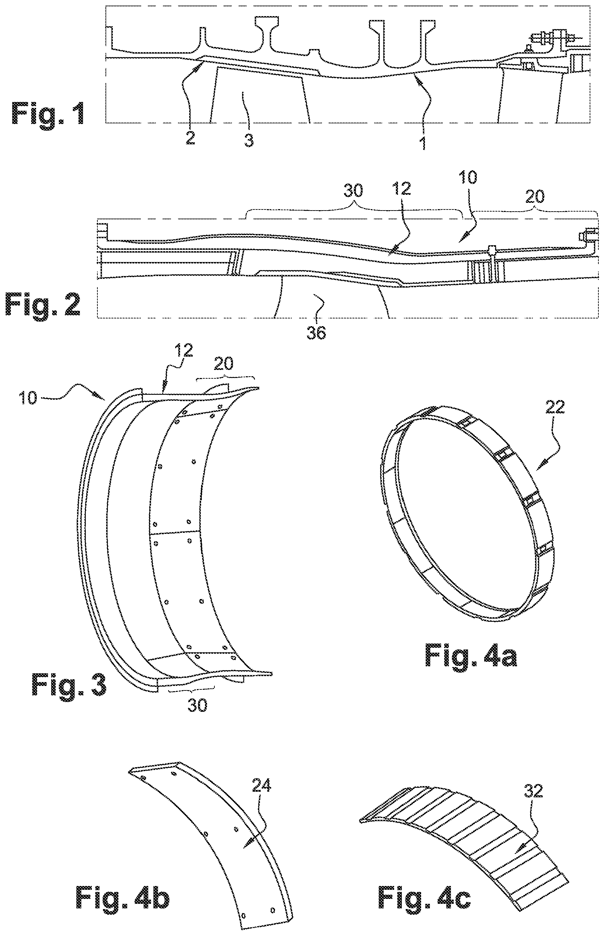

Afin de protéger les aubes mobiles de la soufflante, il existe un carter de soufflante dont une portion est revêtue d'un élément réalisé en matériau abradable. La figure 1 représente un carter 1 de soufflante monobloc avec un élément 2 en matériau abradable agencé en regard d'une aube mobile 3 de la soufflante.

Cependant, un tel carter ne prévoit pas d'éléments acoustiques permettant de réduire les émissions sonores engendrées par la turbomachine.

Afin de diminuer ces émissions sonores, comme représenté sur les figures 2 et 3, un carter 10 de soufflante peut comporter une paroi 12 dont la face interne est recouverte d'un revêtement acoustique 20. Le revêtement acoustique 20 peut comporter une virole acoustique 22 de forme sensiblement annulaire, comme représenté sur la figure 4a, ou une pluralité de panneaux acoustiques 24, par exemple six panneaux en forme de portion annulaire comme représenté sur la figure 4b, répartis sur la circonférence interne de la paroi 12. Comme représenté sur les figures 2 et 3, le carter 10 comporte également un revêtement abradable 30 agencé en regard des extrémités des aubes 36 de la soufflante. Le revêtement abradable 30 comporte une pluralité de cartouches abradables 32, par exemple cinq cartouches en forme de portion annulaire comme représenté sur la figure 4c, réparties sur la circonférence interne de la paroi 12 et garnies de matériau abradable.

Cependant, ces revêtements abradable et acoustique sont coûteux, puisqu'ils sont conçus, développés et fabriqués spécifiquement pour un carter de soufflante, ce qui augmente les coûts de fabrication du carter en lui-même.

De plus, lors de la conception des différents éléments acoustiques, on observe que la conception des interfaces et les jeux entre ces éléments limitent les possibilités et les performances acoustiques. Par exemple, on observe des non-conformités géométriques et cosmétiques sur les panneaux acoustiques, qui sont liées aux différents matériaux qui les composent.

En outre, on rencontre des difficultés lors de l'assemblage du revêtement acoustique sur le carter, notamment liées à des interférences entre les différents éléments qui le compose. Par exemple, une sur-contrainte statique peut apparaître au niveau des liaisons boulonnées permettant de fixer le revêtement acoustique au carter ou une compression anormale des joints agencés entre les différents éléments qui le compose peut apparaître.

La présente invention a notamment pour but d'apporter une solution simple, économique et efficace à ces problèmes, permettant d'éviter les inconvénients de la technique connue.

En particulier, la présente invention permet de fournir un carter de soufflante monobloc avec un élément en matériau abradable et avec un élément ayant des propriétés acoustiques.

### EXPOSE DE L'INVENTION

A cet effet, l'invention concerne un carter de soufflante pour une turbomachine d'aéronef, telle qu'un turboréacteur, ledit carter comportant un corps annulaire monobloc, ledit corps comportant une surface annulaire radialement interne dont une première portion annulaire est en matériau abradable, caractérisé en ce qu'une deuxième portion annulaire de ladite surface interne comprend des trous borgnes conférant à ladite deuxième portion des propriétés acoustiques.

Selon l'invention, un matériau abradable est un matériau qui, lorsqu'il est mis en contact avec une aube mobile de la soufflante, s'use préférentiellement à cette aube.

Au sens de l'invention, une portion ayant des propriétés acoustiques est une portion configurée pour absorber, au moins en partie, les bruits émis par la soufflante en fonctionnement, ce qui limite les nuisances sonores pour les passagers de l'aéronef.

Selon l'invention, un trou borgne correspond à une perforation non-traversante du corps du carter de soufflante.

Avantageusement, l'intégration d'une fonction acoustique directement sur le carter de soufflante permet de simplifier le carter, ainsi que son montage, et donc de diminuer son temps de montage.

Ceci permet également de minimiser l'impact de la fonction acoustique sur les caractéristiques mécaniques de la portion ayant des propriétés acoustiques, tout en gardant la capacité du carter à assurer la continuité mécanique entre la manche d'entrée d'air et le carter intermédiaire de la turbomachine. Les interfaces et les jeux entre les différents éléments du revêtement acoustique sont supprimés, ce qui permet une meilleure continuité aérodynamique, avec un gain de performance.

De plus, ceci permet de réduire la probabilité de défaillance dudit carter, en diminuant les pertes ou ingestion de pièces possibles.

Ceci permet également de réduire le diamètre du carter, ainsi que sa masse d'environ 30%. De ce fait, à masse de carter équivalente, l'épaisseur de ce dernier peut être augmentée, ce qui permet une meilleure tenue à la rétention de débris ou d'une aube de soufflante. En outre, ceci permet d'optimiser la distance entre les sources sonores et les traitements acoustiques.

En outre, ceci permet d'assurer la géométrie de la veine aérodynamique du flux secondaire.

De façon avantageuse, les trous borgnes du carter permettent l'absorption des ondes sonores. Il est possible de faire varier la profondeur, la localisation et le diamètre des trous en fonction des besoins d'atténuation acoustique.

De préférence, ledit corps est réalisé en matériau composite tissé en trois-dimensions. Par exemple, le corps peut être réalisé en textile en fibres de carbone.

Au sens de l'invention, un matériau composite tissé en trois-dimensions est un matériau obtenu par un tissage tridimensionnel.

Ceci permet avantageusement de réduire la masse du carter, notamment par rapport à un carter selon l'art antérieur réalisé en matériau métallique tel que de l'acier ou du titane.

En variante, le corps peut être réalisé en matériau métallique par fabrication additive.

La première portion annulaire peut être revêtue d'un élément annulaire en matériau abradable, notamment lorsque le corps est réalisé en matériau composite tissé en trois-dimensions.

En variante, la première portion annulaire peut être réalisée directement en matériau abradable, notamment lorsque le corps est réalisé par fabrication additive.

De préférence, une troisième portion annulaire de ladite surface interne comprend des trous borgnes conférant à ladite troisième portion des propriétés acoustiques. Lesdites deuxième et troisième portions peuvent être situées respectivement à l'amont et à l'aval de ladite première portion, le sens d'écoulement des gaz dans la turbomachine étant défini de l'amont vers l'aval.

L'atténuation acoustique a pour caractéristique prépondérante le pourcentage d'aire ouverte (« *Percentage Open Area »* en anglais, désigné par l'acronyme POA) qui est déterminé par le diamètre et la localisation des trous borgnes dans les portions ayant des propriétés acoustiques.

Les trous borgnes desdites deuxième et troisième portions peuvent avoir des dimensions et/ou des sections et/ou des dispositions différentes. Ceci permet avantageusement d'avoir un pourcentage d'aire ouverte différent entre les différentes portions ayant des propriétés acoustiques du carter.

Les trous borgnes de ladite deuxième portion peuvent avoir un diamètre inférieur à celui de ladite troisième portion.

Les trous borgnes de ladite deuxième portion peuvent être espacés d'une distance selon l'axe longitudinal du carter, dit premier axe, inférieure à la distance entre les trous borgnes de ladite troisième portion selon ledit premier axe. Les trous borgnes de ladite première portion peuvent être espacés d'une distance selon un axe orthogonal au premier axe, dit deuxième axe, supérieure à la distance entre les trous borgnes de ladite troisième portion selon ledit deuxième axe.

De façon avantageuse, le pourcentage d'aire ouverte de la deuxième portion est inférieur au pourcentage d'aire ouverte de la troisième portion.

L'invention concerne également une turbomachine d'aéronef, telle qu'un turboréacteur, comportant :
- une soufflante comportant des aubes rotatives, et
- un carter de soufflante selon l'invention, la soufflante étant agencée dans ledit carter, ladite première portion et ledit élément s'étendant autour desdites aubes.

L'invention concerne également un procédé de fabrication d'un carter de soufflante selon l'invention, le procédé comprenant :
- le tissage d'une texture fibreuse destinée à former ledit corps en matériau composite tissé en trois-dimensions,
- l'enroulement de ladite texture fibreuse, sur au moins un tour, sur un moule ayant sensiblement la forme dudit carter, de manière à former une préforme ayant sensiblement la forme dudit carter,
- la fermeture dudit moule par des contre-formes,
- l'injection d'une résine dans ledit moule, et
- la polymérisation dans ledit moule de ladite résine afin d'obtenir ledit carter réalisé en composite tissé en trois-dimensions.

Selon un mode de réalisation, le procédé de fabrication comprend :
- préalablement à l'injection de ladite résine dans ledit moule, l'insertion d'aiguilles dans au moins une portion de ladite préforme correspondant à ladite deuxième portion et/ou à ladite troisième portion, et
- pendant la polymérisation de ladite résine, le retrait desdites aiguilles de ladite préforme de manière à obtenir des trous borgnes dans ladite deuxième portion et/ou dans ladite troisième portion.

Selon un autre mode de réalisation, le procédé de fabrication comprend :
- après la polymérisation de ladite résine, un perçage de trous borgnes dans ladite deuxième portion et/ou dans ladite troisième portion dudit carter.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue en coupe semi-axiale d'un carter de soufflante selon l'art antérieur,
- les figures 2 et 3 sont des vues respectivement en coupe semi-axiale et en perspective d'une partie d'un carter de soufflante selon l'art antérieur,
- les figures 4a, 4b et 4c sont des vues en perspective respectivement de la virole acoustique, d'un panneau acoustique et d'un panneau abradable du carter de soufflante des figures 2 et 3,
- la figure 5 est une vue très schématique en perspective d'une turbomachine selon l'invention,
- les figures 6a et 6b sont des vues respectivement en coupe semi-axiale et en perspective d'une partie d'un carter de soufflante selon l'invention,
- la figure 7 est une vue en coupe d'une partie d'un carter de soufflante de la figure 6b,
- les figures 8a et 8b sont des vues très schématiques de trous borgnes respectivement dans la deuxième et dans la troisième portion d'un carter de soufflante selon l'invention,
- les figures 9a et 9b sont des organigrammes d'un procédé de fabrication d'un carter de soufflante selon des modes de réalisation de l'invention, et
- la figure 10 est une vue schématique d'une machine mettant en oeuvre le procédé de fabrication d'un carter de soufflante selon l'invention.

### DESCRIPTION DETAILLEE

L'invention concerne une turbomachine d'aéronef, par exemple un turboréacteur.

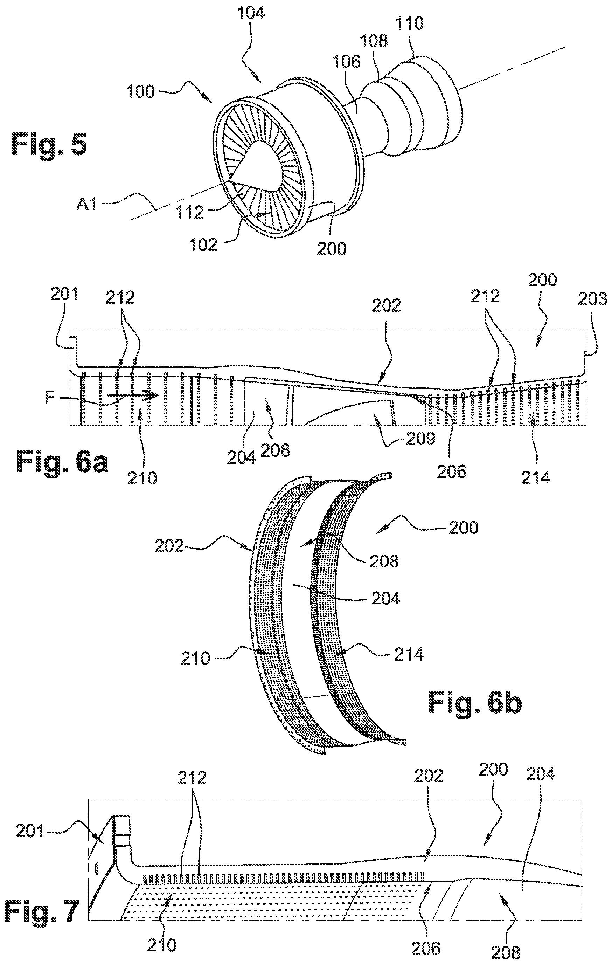

Comme représenté en figure 5, une telle turbomachine 100 comporte, de l'amont vers l'aval dans le sens d'écoulement des gaz, une soufflante 102 disposée en entrée de la turbomachine, au moins un compresseur 104, ici un compresseur basse pression et un compresseur haute pression, une chambre de combustion 106, une turbine basse pression 108 et une turbine haute pression 110. Les turbines 108, 110 sont couplées respectivement au compresseur 104 et à la soufflante 102 par des arbres coaxiaux respectifs. La soufflante 102 comporte des aubes rotatives 112 et est entourée d'un carter 200 de soufflante.

Un carter 200 de soufflante selon l'invention est représenté sur les figures 6a, 6b et 7. Le carter 200 comporte un corps 202 annulaire monobloc s'étendant longitudinalement selon l'axe longitudinal de la turbomachine noté A1 sur la figure 5. Le corps 202 peut être réalisé en matériau composite tissé en trois-dimensions. Le corps 202 peut être réalisé en matériau métallique par fabrication additive. Le carter peut présenter, à son extrémité axiale amont, une bride 201, et à son extrémité axiale aval, une bride 203. Les brides 201, 203 permettent la fixation du carter 200.

Le corps 202 comporte une surface 206 annulaire radialement interne par rapport à l'axe d'élongation du carter 200.

Au sens de l'invention, on entend par « surface annulaire radialement interne », la surface du carter, qui est annulaire, située à l'intérieur du carter par rapport à l'axe d'élongation du carter 200, et donc par rapport à l'axe de la turbomachine 100. Par opposition, on entend par « surface annulaire radialement externe », la surface du carter, qui est annulaire, située à l'extérieur du carter par rapport à l'axe d'élongation du carter 200, et donc par rapport à l'axe de la turbomachine 100. La surface annulaire radialement interne est radialement plus proche de l'axe d'élongation du carter que la surface annulaire radialement externe.

La surface 206 annulaire radialement interne comporte une première portion 208 en matériau abradable. La première portion 208 est configurée pour s'étendre autour des aubes 209 de la soufflante.

Le carter 200 peut comporter un élément 204 annulaire en matériau abradable, par exemple lorsque le corps 202 est réalisé en matériau composite tissé en trois-dimensions. La première portion 208 annulaire peut être revêtue de l'élément 204. En particulier, la première portion 208 et l'élément 204 peuvent être configurés pour s'étendre autour des aubes 209 de la soufflante.

La première portion 208 annulaire peut être réalisée directement en matériau abradable, par exemple lorsque le corps 202 est réalisé en matériau métallique par fabrication additive.

La première portion 208 est située à distance des brides 201, 203.

La surface 206 interne comporte également une deuxième portion 210 annulaire comprenant des trous borgnes 212 conférant à cette deuxième portion 210 des propriétés acoustiques. La deuxième portion 210 est située entre la bride amont 201 et la première portion 208.

La première portion 208 en matériau abradable et la deuxième portion 210 ayant des propriétés acoustiques peuvent faire partie intégrante du carter 200. Plus précisément, ces première et deuxième portions 208, 210 peuvent ne pas être ajoutées au carter, mais le carter et les première et deuxième portions 208, 210 peuvent être monoblocs, notamment dans le cas où le corps est réalisé en matériau métallique par fabrication additive.

La surface 206 interne peut également comporter une troisième portion 214 annulaire comprenant des trous borgnes 212 conférant à cette troisième portion 214 des propriétés acoustiques. La troisième portion 214 est située entre la première portion 208 et la bride aval 203.

En particulier, la première portion 208, la deuxième portion 210 et la troisième portion 214 peuvent faire partie intégrante du carter 200. Ces première, deuxième et troisième portions 208, 210, 214 peuvent ne pas être ajoutées au carter, mais le carter et les première, deuxième et troisième portions 208, 210, 214 peuvent être monoblocs, notamment dans le cas où le corps est réalisé par fabrication additive en matériau métallique.

Comme montré sur les figures 6a et 6b, les deuxième et troisième portions 210, 214 sont situées respectivement à l'amont et à l'aval de la première portion 208, le sens d'écoulement des gaz dans la turbomachine étant défini de l'amont vers l'aval et représenté par la flèche F sur la figure 6a. Autrement dit, la première portion 208 est agencée entre la deuxième portion 210 et la troisième portion 214.

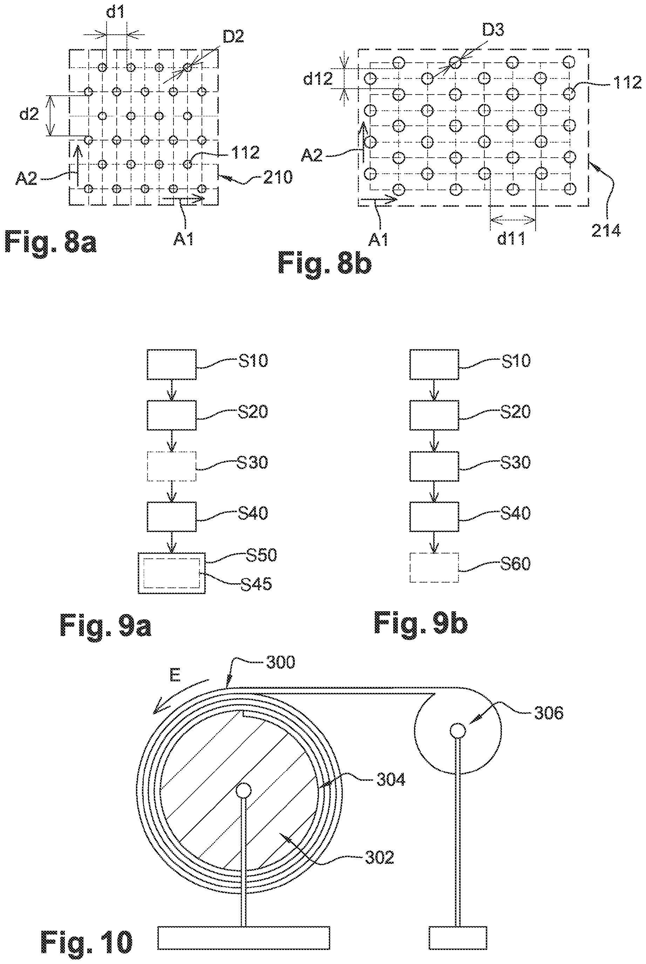

Sur les figures 8a et 8b, les trous borgnes 212 des deuxième et troisième portions 210, 214 sont représentés avec une section circulaire radialement par rapport à l'axe longitudinal A1. Bien entendu, les trous borgnes des deuxième et troisième portions peuvent avoir toute forme de section, notamment une section circulaire, ou ovale, ou polygonale.

Les trous borgnes 212 de la deuxième portion 210 peuvent avoir des sections différentes de celles des trous borgnes 212 de la troisième portion 214.

Des trous borgnes 212 de la deuxième portion 210 peuvent avoir des sections différentes de celles d'autres trous borgnes 212 de la deuxième portion 210. De même, les sections des trous borgnes 212 de la troisième portion 214 peuvent être différentes de celles d'autres trous borgnes 212 de la troisième portion 214.

Les trous borgnes 212 de la deuxième portion 210 peuvent avoir des dimensions différentes de celles des trous borgnes 212 de la troisième portion 214.

Les dimensions, telles que le diamètre ou la profondeur, de trous borgnes 212 de la deuxième portion 210 peuvent être différentes de celles d'autres trous borgnes 212 de la deuxième portion 210. De même, des trous borgnes 212 de la troisième portion 214 peuvent avoir des dimensions différentes de celles d'autres trous borgnes 212 de la troisième portion 214.

Les trous borgnes 212 de la deuxième portion 210 peuvent avoir un diamètre inférieur à celui de la troisième portion 214. Par exemple, sur la figure 8a, le diamètre D2 des trous borgnes 212 de la deuxième portion 210 peut être compris entre 7 % et 13 % de l'épaisseur du carter 200. Sur la figure 8b, le diamètre D3 des trous borgnes 212 de la troisième portion 214 peut être compris entre 10 % et 16 % de l'épaisseur du carter 200.

Les trous borgnes 212 de la deuxième portion 210 peuvent avoir une profondeur inférieure à celle des trous borgnes 212 de la troisième portion 214. Par exemple, le carter 200 ayant une épaisseur comprise entre 10 mm et 14 mm, la profondeur des trous borgnes 212 de la deuxième portion 210 peut être comprise entre 7 % et 50 % de l'épaisseur du carter 200, et la profondeur des trous borgnes 212 de la troisième portion 214 peut être comprise entre 14% et 60 % de l'épaisseur du carter 200.

Les trous borgnes 212 de la deuxième portion 210 peuvent avoir des dispositions différentes de celles des trous borgnes 212 de la troisième portion 214.

Par exemple, les trous borgnes 212 des deuxième et troisième portions 210, 214 peuvent être alignés, comme représenté sur les figures 6a et 7. Les trous borgnes 212 des deuxième et troisième portions 210, 214 peuvent être agencés en quinconce, comme représenté sur les figures 8a et 8b.

Les trous borgnes 212 de la deuxième portion 210 peuvent être espacés d'une distance selon l'axe longitudinal du carter, noté A1, inférieure à la distance entre les trous borgnes 212 de la troisième portion 214 selon l'axe A1. Par exemple, sur la figure 8a, les trous borgnes 212 de la deuxième portion 210 peuvent être espacés d'une distance d1 comprise entre 1,5 fois le diamètre D2 et 2,5 fois le diamètre D2 selon l'axe A1. Sur la figure 8b, les trous borgnes 212 de la troisième portion 214 peuvent être espacés d'une distance d11 comprise entre 2,0 fois le diamètre D3 et 3,5 fois le diamètre D3 selon l'axe A1.

Les trous borgnes 212 de la deuxième portion 210 peuvent être espacés d'une distance selon un axe orthogonal au premier axe, noté A2, supérieure à la distance entre les trous borgnes 212 de la troisième portion 214 selon l'axe A2. Par exemple, sur la figure 8a, les trous borgnes 212 de la deuxième portion 210 peuvent être espacés d'une distance d2 comprise entre 3,0 fois le diamètre D2 et 4,0 fois le diamètre D2 selon l'axe A2. Sur la figure 8b, les trous borgnes 212 de la troisième portion 214 peuvent être espacés d'une distance d12 comprise entre 1,0 fois le diamètre D3 et 2,0 fois le diamètre D3 selon l'axe A2.

Avec une telle configuration le pourcentage d'aire ouverte de la deuxième portion 210 est inférieur au pourcentage d'aire ouverte de la troisième portion 214. Par exemple, le pourcentage d'aire ouverte de la deuxième portion 210 peut être sensiblement égal à 6%, tandis que le pourcentage d'aire ouverte de la troisième portion 214 peut être sensiblement égal à 9%.

L'invention concerne également un procédé de fabrication d'un carter 200 de soufflante selon l'invention, dont les étapes sont représentées sur les figures 9a et 9b.

Le procédé comprend une étape S10 de tissage d'une texture fibreuse destinée à former le corps 202 en matériau composite tissé en trois-dimensions. Par exemple, la texture fibreuse est réalisée en textile en fibres de carbone.

Lors du tissage de la texture fibreuse, l'épaisseur de celle-ci est ajustée en fonction des différentes portions du corps 202. En particulier, l'épaisseur de la texture fibreuse dépend des motifs de tissage utilisés pour le tissage de ladite texture fibreuse. Par exemple, au niveau des brides amont et aval, l'épaisseur de la préforme est conformée pour avoir une bonne tenue thermomécanique en statique, tandis que l'épaisseur de la préforme au niveau des deuxième et troisième portions du corps est conformée pour avoir une bonne tenue mécanique en dynamique. L'épaisseur de la préforme au niveau des deuxième et troisième portions du corps est réduite par rapport à celle au niveau de la première portion du corps. Au niveau de la première portion du corps, l'épaisseur de la préforme est conformée pour avoir une bonne tenue mécanique à la fois en statique et en dynamique.

Ensuite, le procédé comprend une étape S20 d'enroulement de la texture fibreuse, sur au moins un tour, sur un moule ayant sensiblement la forme du carter, de manière à former une préforme 300 ayant sensiblement la forme du carter.

Par exemple, comme représenté sur la figure 10, la texture fibreuse est enroulée sur quatre tours sur un moule 302 de forme sensiblement cylindrique. En particulier, le moule 302 a un profil correspondant à celui du carter à réaliser. Plus précisément, le moule 302 présente une surface externe 304 dont le profil correspond à la surface interne 206 du corps 202 du carter 200 à réaliser. Par son enroulement sur le moule 302, le matériau composite tissé en trois-dimensions épouse le profil de celui-ci. La préforme 300 présente ainsi une forme sensiblement annulaire. Le matériau composite tissé en trois-dimensions est déroulé à partir d'un mandrin de stockage 306. Le sens d'enroulement de la préforme 300 sur le moule 302 est représenté par la flèche E.

Le procédé comprend également une étape S30 de fermeture du moule par des contre-formes. En particulier, le moule est fermé de façon étanche.

Le procédé comprend ensuite une étape S40 d'injection d'une résine dans le moule. La résine, par exemple une résine époxy, permet de densifier la préforme. Une résine, liquide, est injectée à l'intérieur du moule pour imprégner tout le matériau composite tissé en trois-dimensions de la préforme.

Ensuite, le procédé comprend une étape de polymérisation de la résine dans le moule afin d'obtenir le carter. La polymérisation est réalisée par traitement thermique, par exemple par chauffage du moule.

Selon un mode de réalisation illustré par l'organigramme de la figure 9a, le procédé peut comprendre, préalablement à l'étape S40, une étape S35 d'insertion d'aiguilles, ou d'épingles, dans la ou les portions de la préforme auxquelles on souhaite conférer des propriétés acoustiques. Ces aiguilles permettent de former les trous borgnes. En particulier, le moule peut être munis d'aiguilles rétractables ou amovibles qui peuvent faire saillies au niveau des portions de la préforme auxquelles on souhaite conférer des propriétés acoustiques.

Ensuite, le procédé peut comprendre, pendant l'étape S50, une étape S45 de retrait des aiguilles de la préforme de manière à obtenir des trous borgnes dans la ou les portions de la préforme auxquelles on souhaite conférer des propriétés acoustiques.

De préférence, les aiguilles sont insérées, puis retirées des deuxième et troisième portions du corps du carter.

Selon un autre mode de réalisation illustré par l'organigramme de la figure 9b, le procédé peut comprendre, après l'étape S50, une étape S60 de perçage de trous borgnes dans la ou les portions de la préforme auxquelles on souhaite conférer des propriétés acoustiques. De préférence, les trous borgnes sont percés dans les deuxième et troisième portions du corps du carter.

## Revendications

1. Carter (200) de soufflante pour une turbomachine (100) d'aéronef, telle qu'un turboréacteur, ledit carter comportant un corps (202) annulaire monobloc, ledit corps comportant une surface (206) annulaire radialement interne dont une première portion (208) annulaire est en matériau abradable, **caractérisé en ce qu'**une deuxième portion (210) annulaire de ladite surface interne comprend des trous borgnes (212) conférant à ladite deuxième portion des propriétés acoustiques.

2. Carter de soufflante selon la revendication 1, dans lequel ledit corps (202) est réalisé en matériau composite tissé en trois-dimensions.

3. Carter de soufflante selon l'une des revendications 1 ou 2, dans lequel ladite première portion (208) annulaire est revêtue d'un élément (204) annulaire en matériau abradable.

4. Carter de soufflante selon l'une des revendications précédentes, dans lequel une troisième portion (214) annulaire de ladite surface (206) interne comprend des trous borgnes (212) conférant à ladite troisième portion des propriétés acoustiques.

5. Carter de soufflante selon la revendication 4, dans lequel les trous borgnes (212) desdites deuxième et troisième portions (210, 214) ont des dimensions et/ou des sections et/ou des dispositions différentes.

6. Carter de soufflante selon la revendication 5, dans lequel lesdites deuxième et troisième portions (210, 214) sont situées respectivement à l'amont et à l'aval de ladite première portion (208), les trous borgnes (212) de ladite deuxième portion ayant un diamètre (D1) inférieur à celui de ladite troisième portion.

7. Carter de soufflante selon l'une des revendications 5 ou 6, dans lequel les trous borgnes (212) de ladite deuxième portion (210) sont espacés d'une distance (d1) selon l'axe (A1) longitudinal du carter, dit premier axe, inférieure à la distance (d11) entre les trous borgnes de ladite troisième portion (214) selon ledit premier axe, et les trous borgnes de ladite première portion sont espacés d'une distance (d2) selon un axe (A2) orthogonal au premier axe, dit deuxième axe, supérieure à la distance (d12) entre les trous borgnes de ladite troisième portion selon ledit deuxième axe.

8. Turbomachine (100) d'aéronef, telle qu'un turboréacteur, comportant :
- une soufflante (102) comportant des aubes (112) rotatives, et
- un carter (200) de soufflante selon l'une des revendications précédentes, la soufflante étant agencée dans ledit carter, ladite première portion (208) et ledit élément (204) s'étendant autour desdites aubes.

9. Procédé de fabrication d'un carter de soufflante selon l'une des revendications 2 à 7, quand elle dépend au moins de la revendication 2, le procédé comprenant :
- le tissage d'une texture fibreuse destinée à former ledit corps (202) en matériau composite tissé en trois-dimensions (S10),
- l'enroulement de ladite texture fibreuse, sur au moins un tour, sur un moule (302) ayant sensiblement la forme dudit carter (200), de manière à former une préforme (300) ayant sensiblement la forme dudit carter (S20),
- la fermeture dudit moule par des contre-formes (S30),
- l'injection d'une résine dans ledit moule (S40), et
- la polymérisation dans ledit moule de ladite résine afin d'obtenir ledit carter réalisé en composite tissé en trois-dimensions (S50).

10. Procédé de fabrication selon la revendication 9, comprenant :
- préalablement à l'injection de ladite résine dans ledit moule (S40), l'insertion d'aiguilles dans au moins une portion de ladite préforme (300) correspondant à ladite deuxième portion (210) et/ou à ladite troisième portion (214) (S35), et
- pendant la polymérisation de ladite résine (S50), le retrait desdites aiguilles de ladite préforme de manière à obtenir des trous borgnes (212) dans ladite deuxième portion et/ou dans ladite troisième portion (S45).

11. Procédé de fabrication selon la revendication 9, comprenant :
- après la polymérisation de ladite résine (S50), un perçage de trous borgnes (212) dans ladite deuxième portion (210) et/ou dans ladite troisième portion (214) dudit carter (200) (S60).

## Patentansprüche

1. Gebläsegehäuse (200) für eine Turbomaschine (100) eines Luftfahrzeugs, wie eines Turboreaktors, wobei das Gehäuse einen einstückigen ringförmigen Körper (202) umfasst, wobei der Körper eine radial innere ringförmige Oberfläche (206), umfasst, bei der ein erster ringförmiger Abschnitt (208) aus abreibbarem Material besteht, **dadurch gekennzeichnet, dass** ein zweiter ringförmiger Abschnitt (210) der inneren Oberfläche Sacklöcher (212) umfasst, die dem zweiten Abschnitt akustische Eigenschaften verleihen.

2. Gebläsegehäuse nach Anspruch 1, wobei der Körper (202) aus dreidimensional gewebtem Verbundmaterial gefertigt ist.

3. Gebläsegehäuse nach einem der Ansprüche 1 oder 2, wobei der erste ringförmige Abschnitt (208) mit einem ringförmigen Element (204) aus abreibbarem Material überzogen ist.

4. Gebläsegehäuse nach einem der vorstehenden Ansprüche, wobei ein dritter ringförmiger Abschnitt (214) der inneren Oberfläche (206) Sacklöcher (212) umfasst, die dem dritten Abschnitt akustische Eigenschaften verleihen.

5. Gebläsegehäuse nach Anspruch 4, wobei die Sacklöcher (212) des zweiten und dritten Abschnitts (210, 214) unterschiedliche Abmessungen und/oder Teilabschnitte und/oder Anordnungen umfassen.

6. Gebläsegehäuse nach Anspruch 5, wobei sich der zweite und dritte Abschnitt (210, 214) stromaufwärts bzw stromabwärts des ersten Abschnitts (208) befinden, wobei die Sacklöcher (212) des zweiten Abschnitts einen Durchmesser (D1) aufweisen, der kleiner ist als jener des dritten Abschnitts.

7. Gebläsegehäuse nach einem der Ansprüche 5 oder 6, wobei die Sacklöcher (212) des zweiten Abschnitts (210) um einen Abstand (d1) entlang der Längsachse (A1) des Gehäuses, als erste Achse bezeichnet, beabstandet sind, der kleiner ist als der Abstand (d11) zwischen den Sacklöchern des dritten Abschnitts (214) entlang der ersten Achse, und die Sacklöcher des ersten Abschnitts um einen Abstand (d2) entlang einer Achse (A2) orthogonal zur ersten Achse, als zweite Achse bezeichnet, beabstandet sind, der größer ist als der Abstand (d12) zwischen den Sacklöchern des dritten Abschnitts entlang der zweiten Achse.

8. Turbomaschine (100) eines Luftfahrzeugs, wie eines Turboreaktors, umfassend:
- ein Gebläse (102), das drehbare Schaufeln (112) umfasst, und
- ein Gebläsegehäuse (200) nach einem der vorstehenden Ansprüche, wobei
das Gebläse im Gehäuse eingerichtet ist, wobei sich der erste Abschnitt (208) und das Element (204) um die Schaufeln erstrecken.

9. Herstellungsverfahren eines Gebläsegehäuses nach einem der Ansprüche 2 bis 7, wenn es von mindestens Anspruch 2 abhängt, wobei das Verfahren umfasst:
- das Weben einer faserigen Textur, die dazu vorgesehen ist, den Körper (202) aus dreidimensional gewebtem Verbundmaterial zu bilden (S10),
- das Aufrollen der faserigen Textur über mindestens eine Drehung auf eine Form (302), die im Wesentlichen die Form des Gehäuses (200) aufweist, sodass eine Vorform (300) gebildet wird, die im Wesentlichen die Form des Gehäuses aufweist (S20),
- das Schließen der Form durch Gegenformen (S30),
- das Einspritzen eines Harzes in die Form (S40), und
- die Polymerisation, in der Form, des Harzes, um das aus dreidimensional gewebtem Verbundmaterial gefertigte Gehäuse zu erhalten (S50).

10. Herstellungsverfahren nach Anspruch 9, umfassend:
- vor dem Einspritzen des Harzes in die Form (S40), das Einführen von Nadeln in mindestens einen Abschnitt der Vorform (300), der dem zweiten Abschnitt (210) und/oder dem dritten Abschnitt (214) entspricht (S35), und
- während der Polymerisation des Harzes (S50), die Entnahme der Nadeln aus der Vorform, um Sacklöcher (212) im zweiten Abschnitt und/oder im dritten Abschnitt zu erhalten (S45).

11. Herstellungsverfahren nach Anspruch 9, umfassend:
- nach der Polymerisation des Harzes (S50), eine Bohrung der Sacklöcher (212) im zweiten Abschnitt (210) und/oder im dritten Abschnitt (214) des Gehäuses (200) (S60).

## Claims

1. A fan casing (200) for an aircraft turbomachine (100), such as a turbojet engine, said casing comprising a one-piece annular body (202), said body comprising a radially internal annular surface (206), a first annular portion (208) of which is made of an abradable material, **characterised in that** a second annular portion (210) of said internal surface comprises blind holes (212) conferring acoustic properties to said second portion.

2. The fan casing according to claim 1, wherein said body (202) is made of a three-dimensional woven composite material.

3. The fan casing according to one of claims 1 or 2, wherein said first annular portion (208) is lined with an annular element (204) of abradable material.

4. The fan casing according to one of the preceding claims, wherein a third annular portion (214) of said internal surface (206) comprises blind holes (212) conferring acoustic properties to said third portion.

5. The fan casing according to claim 4, wherein the blind holes (212) of said second and third portions (210, 214) have different dimensions and/or cross-sections and/or arrangements.

6. The fan casing according to claim 5, wherein said second and third portions (210, 214) are located respectively upstream and downstream of said first portion (208), the blind holes (212) of said second portion having a smaller diameter (D1) than that of said third portion.

7. The fan casing according to one of claims 5 or 6, in which the blind holes (212) of said second portion (210) are spaced apart by a distance (d1) along the longitudinal axis (A1) of the casing, called first axis, which is smaller than the distance (d11) between the blind holes of said third portion (214) along said first axis, and the blind holes of said first portion are spaced by a distance (d2) along an axis (A2) orthogonal to the first axis, called second axis, greater than the distance (d12) between the blind holes of said third portion along said second axis.

8. An aircraft turbomachine (100), such as a turbojet engine, comprising:
- a fan (102) comprising rotating vanes (112), and
- a fan casing (200) according to one of the preceding claims, the fan being arranged in said casing, said first portion (208) and said element (204) extending around said vanes.

9. A method of manufacturing a fan casing according one of claims 2 to 7 when depending at least to claim 2, the method comprising:
- weaving a fiber texture to form said body (202) of three-dimensional woven composite material (S10),
- winding said fiber texture, over at least one turn, onto a mold (302) having substantially the shape of said casing (200), so as to form a preform (300) having substantially the shape of said casing (S20),
- closing said mold by counter-shapes (S30),
- injecting a resin into said mold (S40), and
- polymerisation in said mold of said resin in order to obtain said casing made of a three-dimensional woven composite (S50).

10. The method of manufacture according to claim 9, comprising:
- prior to the injection of said resin into said mold (S40), inserting needles into at least one portion of said preform (300) corresponding to said second portion (210) and/or said third portion (214) (S35), and
- during polymerisation of said resin (S50), removing said needles from said preform so as to obtain blind holes (212) in said second portion and/or in said third portion (S45).

11. The method of manufacture according to claim 9, comprising:
- after polymerisation of said resin (S50), drilling blind holes (212) in said second portion (210) and/or in said third portion (214) of said casing (200) (S60).
